# EUROPEAN PATENT SPECIFICATION

(11) **EP 4 178 100 B1**
(45) Date of publication and mention of the grant of the patent: **07.10.2026**
(21) Application number: 22205773.9
(22) Date of filing: 07.11.2022
(51) Int. Cl.: H02P 6/15, H02P 6/28

(54) **MOTOR CONTROL AND DEMAGNETIZATION BALANCE VIA PWM SIGNALS**
MOTORSTEUERUNG UND ENTMAGNETISIERUNGSAUSGLEICH ÜBER PWM-SIGNALE
COMMANDE DE MOTEUR ET ÉQUILIBRE DE DÉMAGNÉTISATION PAR L'INTERMÉDIAIRE DE SIGNAUX PWM

(30) Priority: 09.11.2021 US 202117522369
(43) Date of publication of application: 10.05.2023
(73) Proprietor: Infineon Technologies Austria AG, 9500 Villach (AT)
(72) Inventor: WU, Wei, Rancho Palos Verdes, 90275 (US); PRABHALA, Venkata Anand, El Segundo, 90245 (US)
(74) Representative: Kraus & Lederer PartGmbB

(56) References cited:
- EP-A1- 3 493 393
- EP-A1- 3 876 419
- US-A1- 2020 186 144
- ZELJKO GRBO ET AL: "Cost-optimized switched reluctance motor drive with bipolar currents", ELECTRICAL ENGINEERING ; ARCHIV FÜR ELEKTROTECHNIK, SPRINGER, BERLIN, DE, vol. 89, no. 3, 28 December 2005 (2005-12-28), pages 183 - 191, XP019457878, ISSN: 1432-0487
- STM: "PWM MANAGEMENT FOR 3 PHASE BLDC MOTOR DRIVES USING THE ST7MC", INTERNET CITATION, 31 December 2007 (2007-12-31), pages 1 - 39, XP002790677, Retrieved from the Internet <URL:https://www.st.com/content/ccc/resource/technical/document/application_note/5d/04/eb/5e/87/77/48/cb/CD00041736.pdf/files/CD00041736.pdf/jcr:content/translations/en.CD00041736.pdf> [retrieved on 20190416]

## Description

### BACKGROUND

Implementation of conventional brushless DC motors (a.k.a., BLDC motors) are susceptible to imbalance of power losses. For example, implementation of a conventional BLDC pulse width modulation drive scheme results in unevenly distributed power dissipation between respective high side switch circuitry and low side switch circuitry controlling the flow of current through windings of the motor during winding demagnetization, which occurs twice per control cycle. For example, the implementation of conventional BLDC pulse width modulation drive schemes shows inconsistent rates of rising and falling during positive and negative demagnetization of respective motor windings. Slower demagnetization times results in higher power losses.

Conventional motor applications include implementation of software to speed-up demagnetization of respective windings. However, ideal demagnetization times vary depending on one or more factors such as motor speed, DC bus voltage, and load conditions.

US 2020/186144 A1 discloses an apparatus according to the preamble of claim 1. Further motor control schemes are known from Zeljko Grbo et al., "Cost-optimized switched reluctance motor drive with bipolar currents", Electrical Engineering, Archiv für Elektrotechnik, Springer, Berlin, DE, vol. 89 no. 3 or from EP 3 876 419 A1.

### BRIEF DESCRIPTION

The invention is disclosed in the appended claims. An apparatus as defined in claim 1, a system as defined in claim 4, and a method as defined in claim 5 are provided. The dependent claims define further embodiments.

In contrast to conventional techniques, this disclosure includes novel ways of improving positive demagnetization and negative demagnetization of windings in a motor.

### BRIEF DESCRIPTION OF THE DRAWINGS

FIG. 1 is an example general diagram of a motor and corresponding control system.
FIG. 2 is an example diagram illustrating details of the motor control system.
FIG. 3 is an example diagram illustrating different pulse width modulation driver patterns.
FIG. 4 is an example diagram illustrating a comparison of conventional pulse width modulation patterns and novel driver patterns, wherein only patterns 6 and 7 correspond to claimed embodiments.
FIG. 5 is an example diagram illustrating balanced positive demagnetization of a winding and negative demagnetization of the winding in a respective control cycle.
FIG. 6 is an example model illustrating components of a respective motor driver and corresponding windings in a motor.
FIG. 7A is an example diagram illustrating operation of the motor during positive demagnetization.
FIG. 7B is an example diagram illustrating implementation of a conventional pulse width modulation drive pattern.
FIG. 7C is an example diagram illustrating implementation of a pulse width modulation drive pattern.
FIG. 8A is an example diagram illustrating operation of the motor during positive demagnetization.
FIG. 8B is an example diagram illustrating implementation of a conventional pulse width modulation drive pattern.
FIG. 8C is an example diagram illustrating implementation of a pulse width modulation drive pattern.
FIG. 9 is an example diagram illustrating high side switch circuitry and low side switch circuitry losses at different torque settings of the motor.
FIG. 10 is an example diagram illustrating computer processor hardware and related software instructions that execute methods as described herein.
FIG. 11 is an example diagram illustrating a method as discussed herein.
FIG. 12 is an example diagram illustrating assembly of a circuit as discussed herein.

The foregoing and other objects, features, and advantages of the invention will be apparent from the following more particular description of preferred implementations herein, as illustrated in the accompanying drawings in which like reference characters refer to the same parts throughout the different views. The drawings are not necessarily to scale, with emphasis instead being placed upon illustrating the implementations, operations, principles, concepts, etc.

### DETAILED DESCRIPTION

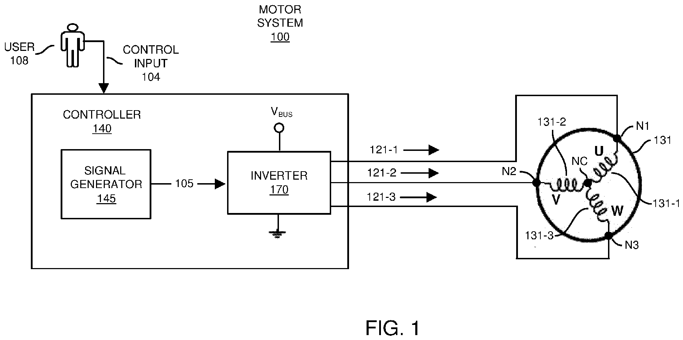

Now, more specifically, FIG. 1 is an example general diagram of a motor control system.

As shown, the motor system 100 (motor system or other suitable type system including one or more windings) includes controller 140 that controls operation of the motor 131. The motor 131 can be configured to include any number of windings. In this non-limiting example, motor 131 includes multiple windings such as winding 131-1, winding 131-2, and winding 131-3.

Motor 131 is a three phase BLDC (Brushless DC Motor).

Further, one end of each of the windings of motor 131 is connected to a respective common node NC. For example, the winding 131-1 is connected between the node N1 and the common node NC; the winding 131-2 is connected between the node N2 and the common node NC; the winding 131-3 is connected between the node N3 and the common node NC.

The inverter 170 can be configured to include one or more switches. The switches in inverter 170 can be any suitable type such as MOSFETs (Metal Oxide Semiconductor Field Effect Transistors), IGBT (Insulated-Gate Bipolar Transistor), BJT (Bipolar Junction Transistors), etc.

Controller 140 can be configured to further include signal generator 145 and inverter 170 (such as switch circuitry) to drive each of the windings 131-1, 131-2, and 131-3 associated with the motor 131. For example, the controller 140 receives respective control input 104 from the user 108. Based on the control input 104, such as one or more signals indicating how to control operation of the motor 131, the controller 140 operates the signal generator 145 to produce control signals 105. Appropriate timing of control signals 105 controls operation of respective switches in the inverter 170 and variation in the magnitudes of current 121-1, 121-2, and 121-3, resulting a corresponding rotation of a shaft of the motor 131.

Thus, the controller 140 may receive control input 104 indicating how to control operation of motor 131. In accordance with the control input 104, the controller 140 controls a corresponding flow of current 121-1, 121-2, and 121-3 through respective windings 131-1, 131-2, and 131-3 of the motor 131. According to one implementation as further discussed herein, via generation of control signals 105 (such as pulse width modulation signals), the controller 140 balances positive demagnetization and negative demagnetization of each of the multiple windings in a respective control cycle.

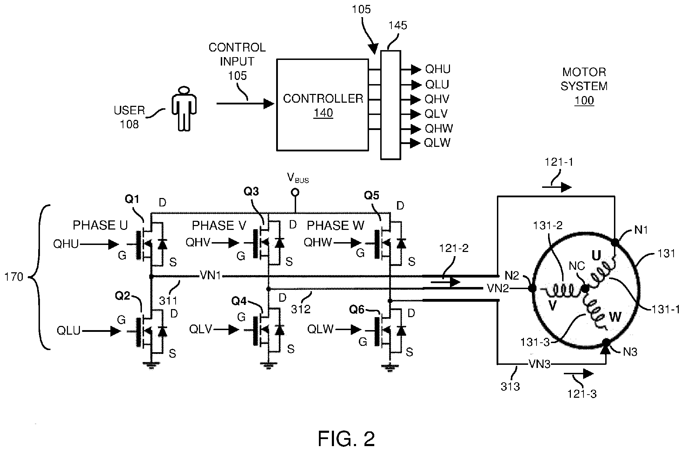

FIG. 2 is an example diagram illustrating a motor control system.

In this example, the inverter 170 includes switches(n-channel MOSFETs) such as switch Q1 (such as high side switch circuitry), switch Q2 (such as low side switch circuitry), switch Q3 (such as high side switch circuitry), switch Q4 (such as low side switch circuitry), switch Q5 (such as high side switch circuitry), and switch Q6 (such as low side switch circuitry).

Each of the pairs of switches may control delivery of current to a respective winding of the motor 131. For example, the combination of switches Q1 and Q2 controls the voltage VN1 supplied to node N1 and thus delivery of current 121-1 through the winding 131-1. The combination of switches Q3 and Q4 controls the voltage VN2 supplied to node N2 and thus delivery of current 121-2 through the winding 131-2. The combination of switches Q5 and Q6 controls the voltage VN3 supplied to node N3 and thus delivery of current 121-3 through the winding 131-3.

As shown, the inverter 170 and corresponding circuitry can be configured in any suitable manner. For example, a combination of switch Q1 and switch Q2 can be configured to form a first series path between voltage source Vbus (supply voltage such as 24 VDC or other suitable value) and ground reference voltage (reference voltage). The drain node D of switch Q1 is coupled to the voltage Vbus. The source node of switch Q1 is connected to the drain node of switch Q2. The source node of switch Q2 is connected to a ground reference voltage.

As further shown, a combination of switch Q3 and switch Q4 form a second series path between voltage source Vbus (supply voltage such as 24 VDC or other suitable value) and ground. The drain node D of switch Q3 is coupled to the voltage Vbus. The source node of switch Q3 is connected to the drain node of switch Q4. The source node of switch Q4 is connected to a ground reference voltage.

Yet as further shown, a combination of switch Q5 and switch Q6 form a third series path between voltage source Vbus (supply voltage such as 24 VDC or other suitable value) and ground. The drain node D of switch Q5 is coupled to the voltage Vbus. The source node of switch Q5 is connected to the drain node of switch Q6. The source node of switch Q6 is connected to a ground reference voltage.

As previously discussed, motor 130 includes three windings such as motor winding 131-1, motor winding 131-2, and motor winding 131-3. The sum of current 121-1, 121-2, and 121-3 through all windings 131-1, 131-2, and 131-3 is zero. Hence, if a magnitude of currents through two windings is known, the current in the third winding can be determined from the first two known magnitudes of current.

As previously discussed, nodes of all three windings 131-1, 131-2, and 131-3 are connected together at a common node NC of the motor 131.

Yet further, via generation of the control signals 105, the pulse width modulation generator 145 produces control signals such as Qhu, Qlu, Qhv, Qlv, Qhw, Qlw) applied to respective switches Q1-Q6 to control control an amount of current through the windings. For example, based on control signals 105, the signal generator 145 produces control signals Qhu, Qlu, Qhv, Qlv, Qhw, and Qlw.

The signal generator 145 of controller 140 drives the gate node G of the switch Q1 with control signal Qhu; the signal generator 145 of controller 140 drives the gate node G of the switch Q2 with control signal Qlu; the signal generator 145 of controller 140 drives the gate node G of the switch Q3 with control signal Qhv; the signal generator 145 of controller 140 drives the gate node G of the switch Q4 with control signal Qlv; the signal generator 145 of controller 140 drives the gate node G of the switch Q5 with control signal Qhw; the signal generator 145 of controller 140 drives the gate node G of the switch Q6 with control signal Qlw.

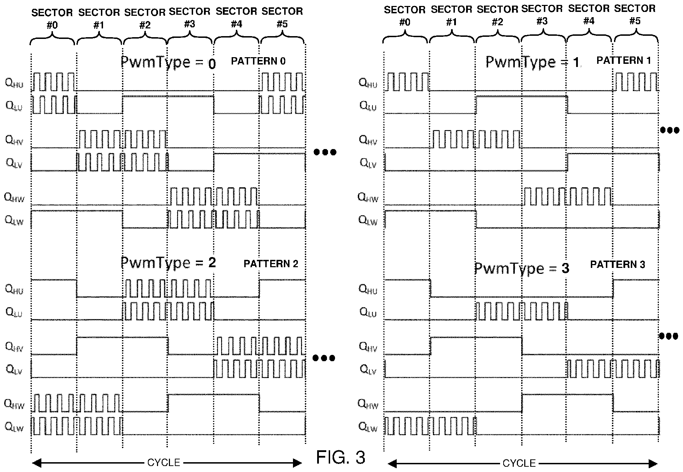

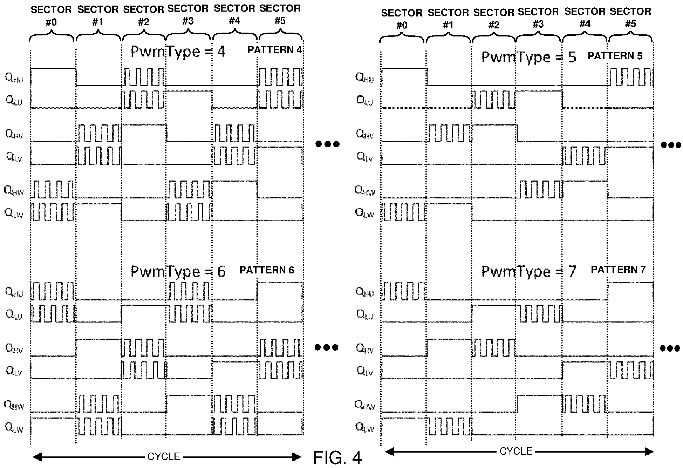

Examples of pulse width modulation controls signals (such as Qhu, Qlu, Qhv, Qlv, Qhw, Qlw) driving respective gate nodes of the switches of inverter 170 are shown in FIGS. 3 and 4.

FIG. 3 is an example diagram illustrating different conventional pulse width modulation driver patterns.

Each of the pulse width modulation control patterns in FIG. 3 includes six sectors (such as sector #0, sector #1, sector #2, sector #3, sector #4, and sector #5) per control cycle of controlling one revolution of the shaft associated with the motor 131. Each sector corresponds to 60 degrees of rotation. The controller 140 repeats the respective PWM pattern for each of multiple cycles to control operation of the motor 131.

As further shown, the PWM type 0 pattern (also known as pattern 0) indicates settings of respective signals applied to the respective switches of inverter 170. Note that a logic high of a respective signal indicates to activate a corresponding switch (to an ON state, short, or low resistive path) of the inverter 170; a logic low of a respective drive signal indicates to deactivate a corresponding switch (to an OFF state, open circuit path, or high resistive path) of the inverter 170.

Thus, as shown, during sector #0 of PWM pattern 0, the controller 140: i) toggles switches Q1 and Q2 between ON and OFF states; ii) deactivates both of switches Q3 and Q4, and iii) deactivates switch Q5 and activates the switch Q6.

During sector #1 of PWM pattern 0, the controller 140: i) toggles switches Q3 and Q4 between ON and OFF states; ii) deactivates both of switches Q1 and Q2, and iii) deactivates switch Q5 and activates the switch Q6.

During sector #2 of PWM type 0, the controller 140: i) toggles switches Q3 and Q4 between ON and OFF states; ii) deactivates both switches Q5 and Q6, and iii) deactivates switch Q1 and activates the switch Q2.

During sector #3 of PWM type 0, the controller 140: i) toggles switches Q5 and Q6 between ON and OFF states; ii) deactivates both switches Q3 and Q4, and iii) deactivates switch Q1 and activates the switch Q2.

During sector #4 of PWM type 0, the controller 140: i) toggles switches Q5 and Q6 between ON and OFF states; ii) deactivates both switches Q1 and Q2, and iii) deactivates switch Q3 and activates the switch Q4.

During sector #5 of PWM type 0, the controller 140: i) toggles switches Q1 and Q2 between ON and OFF states; ii) deactivates both switches Q5 and Q6, and iii) deactivates switch Q3 and activates the switch Q4.

For sectors of PWM type 0 in which the controller 140 switches the respective high side switch circuitry and low side switch circuitry ON and OFF, the controller 140 sets the duty cycle of switching depending on how much current is needed to drive the respective windings of motor 131.

PWM pattern 1 operates in a similar manner as PWM type 0 except that the low side switches are not switched between on and off states.

During sector #0 of PWM type 2, the controller 140: i) toggles switches Q5 and Q6 between ON and OFF states; ii) deactivates both of switches Q3 and Q4, and iii) activates switch Q1 and deactivates switch Q2.

During sector #1 of PWM type 2, the controller 140: i) toggles switches Q5 and Q6 between ON and OFF states; ii) deactivates both of switches Q1 and Q2, and iii) activates switch Q3 and deactivates switch Q4.

During sector #2 of PWM type 2, the controller 140: i) toggles switches Q1 and Q2 between ON and OFF states; ii) deactivates both of switches Q5 and Q6, and iii) activates switch Q3 and deactivates switch Q4.

During sector #3 of PWM type 2, the controller 140: i) toggles switches Q1 and Q2 between ON and OFF states; ii) deactivates both of switches Q3 and Q4, and iii) activates switch Q5 and deactivates switch Q6.

During sector #4 of PWM type 2, the controller 140: i) toggles switches Q3 and Q4 between ON and OFF states; ii) deactivates both of switches Q1 and Q2, and iii) activates switch Q5 and deactivates switch Q6.

During sector #5 of PWM type 2, the controller 140: i) toggles switches Q3 and Q4 between ON and OFF states; ii) deactivates both of switches Q5 and Q6, and iii) activates switch Q1 and deactivates switch Q2.

PWM type 3 operates in a similar manner as PWM type 2 except that the low side switches are not switched between on and off states.

FIG. 4 is an example diagram illustrating a comparison of conventional pulse width modulation and novel driver patterns, where only patterns 6 and 7 correspond to claimed embodiments.

Each of the pulse width modulation control patterns in FIG. 4 includes six sectors (such as sector #0, sector #1, sector #2, sector #3, sector #4, and sector #5) per control cycle of controlling one revolution of the shaft associated with the motor 131. Each sector corresponds to 60 degrees of rotation. The controller 140 repeats the respective PWM pattern for each of multiple cycles to control operation of the motor 131.

As further shown, the PWM type 4 pattern indicates signals applied to the respective switches of inverter 170. A logic high of a respective signal indicates to activate a corresponding switch (to an ON state, short, or low resistive path) of the inverter 170; a logic low of a respective drive signal indicates to deactivate a corresponding switch (to an OFF state, open circuit path, or high resistive path) of the inverter 170.

Thus, as shown, during sector #0 of PWM pattern 4, the controller 140: i) toggles switches Q5 and Q6 between ON and OFF states; ii) deactivates both of switches Q3 and Q4, and iii) activates switch Q1 and deactivates the switch Q2.

During sector #1 of PWM type 4, the controller 140: i) toggles switches Q3 and Q4 between ON and OFF states; ii) deactivates both of switches Q1 and Q2, and iii) deactivates switch Q5 and activates the switch Q6.

During sector #2 of PWM type 4, the controller 140: i) toggles switches Q1 and Q2 between ON and OFF states; ii) deactivates both of switches Q5 and Q6, and iii) activates switch Q3 and deactivates the switch Q4.

During sector #3 of PWM type 4, the controller 140: i) toggles switches Q5 and Q6 between ON and OFF states; ii) deactivates both of switches Q3 and Q4, and iii) deactivates switch Q1 and activates the switch Q2.

During sector #4 of PWM type 4, the controller 140: i) toggles switches Q3 and Q4 between ON and OFF states; ii) deactivates both of switches Q1 and Q2, and iii) activates switch Q5 and deactivates the switch Q6.

During sector #5 of PWM type 4, the controller 140: i) toggles switches Q1 and Q2 between ON and OFF states; ii) deactivates both of switches Q5 and Q6, and iii) deactivates switch Q3 and activates the switch Q4.

For sectors of PWM type 4 in which the controller 140 switches the respective high side switch circuitry and low side switch circuitry ON and OFF, the controller 140 sets the duty cycle of switching switches depending on how much current is needed to drive the respective windings of motor 131.

PWM type 5 operates in a similar manner as PWM type 4 except that the low side switches are not switched between on and off states.

During sector #0 of PWM type 6, the controller 140: i) toggles switches Q1 and Q2 between ON and OFF states; ii) deactivates both of switches Q3 and Q4, and iii) deactivates switch Q5 and activates switch Q6.

During sector #1 of PWM type 2, the controller 140: i) toggles switches Q5 and Q6 between ON and OFF states; ii) deactivates both of switches Q1 and Q2, and iii) activates switch Q3 and deactivates switch Q4.

During sector #2 of PWM type 6, the controller 140: i) toggles switches Q3 and Q4 between ON and OFF states; ii) deactivates both of switches Q5 and Q6, and iii) deactivates switch Q1 and activates switch Q2.

During sector #3 of PWM type 2, the controller 140: i) toggles switches Q1 and Q2 between ON and OFF states; ii) deactivates both of switches Q3 and Q4, and iii) activates switch Q5 and deactivates switch Q6.

During sector #4 of PWM type 6, the controller 140: i) toggles switches Q5 and Q6 between ON and OFF states; ii) deactivates both of switches Q1 and Q2, and iii) deactivates switch Q3 and activates switch Q4.

During sector #5 of PWM type 2, the controller 140: i) toggles switches Q3 and Q4 between ON and OFF states; ii) deactivates both of switches Q5 and Q6, and iii) activates switch Q1 and deactivates switch Q2.

PWM type 7 operates in a similar manner as PWM type 6 except that the low side switches are not switched between on and off states as shown.

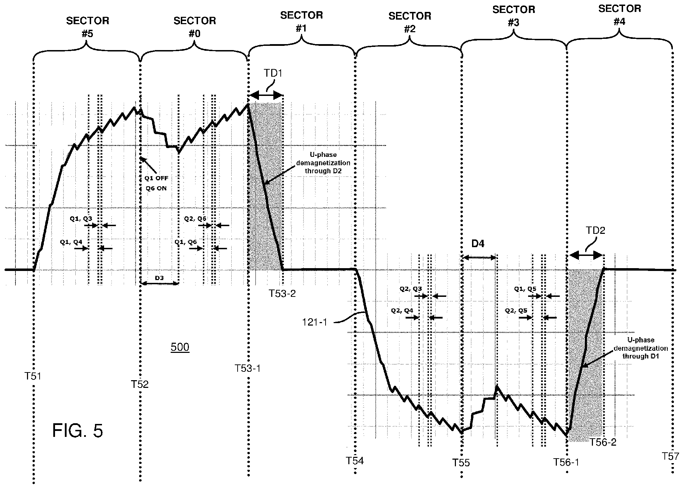

FIG. 5 is an example diagram illustrating balanced positive demagnetization and negative demagnetization in a winding during a respective control cycle. The controller 140 balances positive demagnetization and negative demagnetization in a similar manner as shown in FIG. 5 for winding 131-1.

In this example, graph 500 (timing diagram) depicts the current 121-1through winding 131-1 of motor 131 during a switching cycle of implementing the control signals associated with PWM pattern type 6. In a manner as previously discussed, the switching cycle includes operation in multiple sectors (including sector #0, second #1, second #2, sector #3, sector #4, and sector #5).

Further in this example, the controller 140 applies pattern 6 of pulse width modulation signals to control the winding 131-1. The PWM signals as discussed herein and applied to the switches in the inverter 170 include dead-time inserted between each PWM transition to prevent shoot-through current (that is, as is known in the art, dead time prevents shorting of the voltage Vbus to the ground reference voltage). In other words, high side switch circuitry and low side switch circuitry of a respective phase are not ON at the same time. The complementary switching of a respective high side switch and low side switch during each of the sectors of pattern 6 and 7 in a respective control cycle results in a sawtooth pattern as can be seen in current 121-1 through winding 131-1 as shown in graph 500.

With reference to graph 500, at the beginning of sector #5 (such as time T51), the current 121-1 through the winding 131-1 is substantially 0 amperes. Application of the pulse width modulation signals associated with sector #5 of PWM type 6 (see FIG. 4 for signals) between time T51 and T52 cause the magnitude of the current 121-1 to increase in a positive direction between time T51 at time T52.

Application of the pulse width modulation signals associated with sector #0 of PWM type 6 (see FIG. 4) between time T52 and T53-1 causes the magnitude of the current 121-1 to initially decrease and then increase between time T52 at time T53-1.

Application of the pulse width modulation signals associated with sector #1 of PWM type 6 (see FIG. 4) between time T53-1 and T54 causes the magnitude of the current 121-1 to decrease between time T53-1 at time T53-2. Positive demagnetization of the winding 131-1 (a.k.a., U winding) occurs between time T53-1 and T53-2 (having time duration TD1) based on application of the pulse width modulation switch control signals associated with sector #1 of PWM pattern type 6. Positive demagnetization of the winding 131-1 includes starting at a positive current 121-1 through the winding 131-1 at time T53-1 and reducing the magnitude of the current 121-1 through (and corresponding energy and magnetic flux stored in) the winding 131-1 from a peak at time T53-1 to substantially zero Amperes (and zero magnetic flux) at around T53-2. The current 131-1 and magnetic flux in winding 131-1 is substantially 0 amperes between time T53-2 and time T54.

At the beginning of sector #2 (such as time T54), the current 121-1 through the winding 131-1 is substantially 0 amperes. Application of the pulse width modulation signals associated with sector #2 of PWM type 6 (see FIG. 4) between time T54 and T55 causes the magnitude of the current 121-1 to increase (in a negative direction) between time T54 at time T55.

Application of the pulse width modulation signals associated with sector #3 of PWM type 6 (see FIG. 4) between time T55 and T56-1 causes the magnitude of the current 121-1 to initially decrease and then increase in a negative direction.

Application of the pulse width modulation signals associated with sector #4 of PWM pattern type 6 (see FIG. 4) between time T56-1 and T57 causes the magnitude of the current 121-1 to decrease between time T56-1 at time T57. In this example embodiment, so-called negative demagnetization of the winding 131-1 (a.k.a., U winding) occurs between time T56-1 and T56-2 (having time duration TD2) based on application of the pulse width modulation switch control signals associated with sector #4 of PWM pattern type 6. In one embodiment, negative demagnetization of the winding 131-1 includes starting at a peak negative current 121-1 through the winding 131-1 at or around time T56-1 and reducing the magnitude of the current 121-1 through (and corresponding energy stored in) the winding 131-1 from the peak current at time T56-1 to substantially zero Amperes at around T56-2.

Thus, implementations herein include the controller 140 receiving control input 104 indicating how to control operation of the motor 131. In one embodiment, the controller 140 uses the control input 104 as a basis in which to determine how to control the respective duty cycle of pulse width modulation signals driving the switches in the inverter 170. In accordance with the control input 104, the controller 140 controls a corresponding flow of current 121-1, 121-2, and 121-3, through each of multiple windings 131-1, 131-2, and 131-3 of the motor 131 using pulse width modulation pattern 6 or 7. While controlling the corresponding flow of current through each of multiple windings, the controller 140 balances positive demagnetization and negative demagnetization of each of the multiple windings in each respective control cycle of multiple control cycles. In other words, in a similar manner as previously discussed with respect to controlling the winding 131-1, the controller 140 applies the novel PWM control signals (such as PWM pattern type 6 control signals or PWM pattern type 7 control signals) to equalize the time duration TD1 of the positive demagnetization and the time duration TD2 of the negative demagnetization for each of the windings in motor 131 over a respective control cycle.

Note that the time duration TD1 is not exactly equal to but is substantially equal to the time duration TD2 due to variations in circuit parameters but within a threshold value of each other such as X%, where X is any integer value between 1 and 20. In other words, the controller 140 may control the TD2 to fall in a range between (1 + X%) x TD1 and (1 - X%) x TD1. Thus, the controller 140 can be configured to control a duration TD1 of the positive demagnetization (decreasing a magnitude of positive magnetic flux in the winding 131-1 to zero) and a duration TD2 of the negative demagnetization (decreasing a magnitude of negative magnetic flux in the winding 131-1 to zero) of each of the multiple windings in the respective control cycle to be within a threshold value of each other.

As a further example, the controller can be configured to control a first rate such as RATE1 (volts per second) of the positive demagnetization between time T53-1 and time T53-2 and a second rate such as RATE2 (volts per second) of the negative demagnetization between time T56-1 and T56-2 of each of the multiple windings in the respective control cycle to be within a threshold value such as X% (such as between 1% and 20%) or other suitable value of each other. In other words, RATE2 falls in a range between (1 + X%) x RATE1 and (1 - X%) x RATE1, or vice versa.

Thus, as previously discussed, implementation of the pulse width modulation controls signal patterns 6 or pattern 7 advantageously results in substantially equalizing a time duration TD1 of the positive demagnetization to a duration TD2 of the negative demagnetization of each of the multiple windings in the respective control cycle.

Note again that, in addition to supporting substantial equalizing of the positive demagnetization and negative demagnetization operations as discussed herein, implementation of the pulse width modulation patterns 6 and 7 via the controller results in controlling current through each of the multiple windings 131-1, 131-2, and 131-3 of the motor 131 such that an average magnitude of the current 121-1, 121-2, and 121-3 through each of the multiple windings is substantially equal during the respective control cycle.

As previously discussed, implementation of pulse width modulation and substantial equalization of the positive demagnetization time and negative demagnetization time (as well as providing a faster positive and negative demagnetization times over conventional techniques) as discussed herein provides beneficial operation such as one or more of the following: i) evenly distributed power dissipation amongst high side switch and low side switch on each motor phase, ii) during commutation (switch from one PWM sector to another), demagnetization time of non-excited phases becomes shorter, which helps reduce power loss, iii) during commutation, current rising time of new excited phase becomes shorter, which helps increase BLDC motor control efficiency.

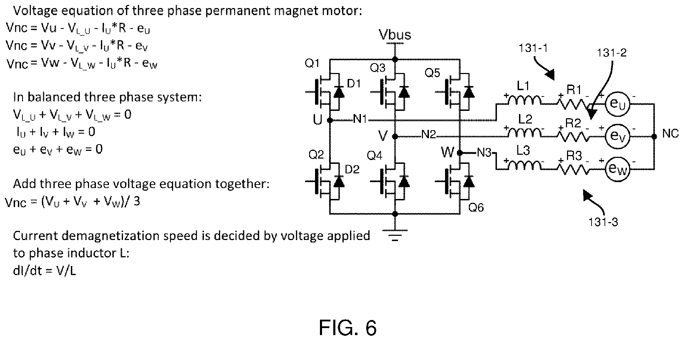

FIG. 6 is an example model illustrating components of a respective motor driver and corresponding windings in a motor.

As shown in FIG. 6, the winding 131-1 is modeled to include an inductance L1, resistance R1, and voltage source Eu for back EMF voltage; the winding 131-2 is modeled to include an inductance L2, resistance R2, and voltage source Ev for back EMF voltage, the winding 131-3 is modeled to include an inductance L3, resistance R3, and voltage source Ew for back EMF voltage. In this example, L1 = L2 = L3; R1 = R2 = R3.

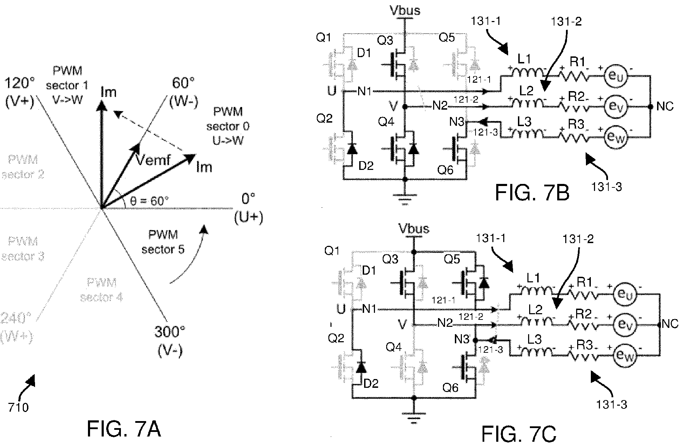

FIG. 7A is an example diagram illustrating operation of the motor in sector #1 during positive demagnetization.

The graph 710 of FIG. 7A illustrates current through the winding 131-1 (U-winding) and presence of a back electro-magnetic force (emf) voltage. For example, for winding 131-1 (a.k.a., U-winding), positive current demagnetization happens at the beginning of the PWM sector 1 (around time T53-1 in FIG. 5). At that time, the winding 131-1 (U-winding) phase current starts with positive Im (a.k.a., current 121-1) and then decreases to 0 (e.g., the V phase starts with 0 current and then increases to IM; W phase current stays in negative current - Im).

In an ideal the BLDC motor control condition, the rotor back EMF voltage angle is at 60 degrees. Assuming the back EMF to be sinusoidal voltage, the back EMF on each phase is as follows: $Eu = Vemf * cos \left(-60 degs\right) = 0.5 Vemf$ $Ev = Vemf * cos \left(60 degs\right) = 0.5 Vemf$ $Ew = Vemf * cos \left(180 degs\right) = - Vemf$

FIG. 7B is an example diagram illustrating implementation of a conventional pulse width modulation drive pattern during sector #1. Implementation of the pulse width modulation patterns 0, 1, 4, and 5 result in slow demagnetization in sector #1.

For example, the inverter 170 output for sector #1 (for patterns 0, 1, 4, and 5) and respective voltages of nodes is as follows: $Vu = 0 ,$ where Vu is the voltage at node N1 of the motor 131; during sector #1, the inherent diode D2 of switch Q2 effectively connects node N1 to the ground reference voltage (current 121-1 flows from the ground reference voltage through diode D2 to node N1); $Vv = Vbus * D ,$ Vv is the voltage at node N2 of the motor 131 and D is the duty cycle of controlling switches Q3 and Q4; during sector #1, per patterns 0, 1, 4, 5, the switches Q3 and Q4 are modulated in a manner as previously discussed; and $Vw = 0 ,$ where Vw is the voltage at node N3 of the motor 131, during sector #1, the switch Q6 is ON setting node N3 to the ground reference voltage.
Thus, the voltage Vnc = Vbus * D/3, where the voltage Vnc is a magnitude of the voltage at the common node NC of the motor 131.
The voltage Vlu across the node N1 and NC of the winding 131-1 (U-winding) in sector #1 is as follows: $Vlu = 0 - Vnc = 0 - Vbus * D / 3 - Eu - Im * R 1 < 0 ,$ Vbus is a DC voltage, where R1 is a resistance of the winding 131-1, Eu = Vemf * cos(-60 degs) = 0.5Vemf.

Since Vbus, Eu, and Im are positive values in this case, the voltage Vlu across the first node N1 and node NC of the winding 131-1 is negative, resulting in a decrease of the magnitude of the current 121-1 to zero.

FIG. 7C is an example diagram illustrating implementation of a pulse width modulation drive pattern during sector #1.

Implementation of the pulse width modulation patterns 2, 3, 6, and 7 results in a shorter positive demagnetization time duration (faster demagnetization) in sector #1 than positive for patterns 0, 1, 4, and 5.

For example, the inverter 170 output for sector #1 (for patterns 2, 3, 6, and 7) is as follows: $Vu = 0 ,$ where Vu is the voltage at node N1 of the motor 131; during sector #1, the inherent diode D2 of switch Q2 effectively connects node N1 of winding 131-1 to the ground reference voltage (current 121-1 flows from the ground reference voltage through diode D2 to node N1); $Vv = Vbus ,$ where Vv is the voltage at node N2 of the motor 131, where activation of switch Q3 connects the node N2 to Vbus; $Vw = Vbus * \left(1-D\right) ,$ Vw is the voltage at node N3 of the motor 131 and where 1-D is the duty cycle of controlling switches Q5 and Q6.
Thus, the voltage Vnc = Vbus * (2/3 -D/3), where the voltage Vnc is a magnitude of the voltage at the common node NC of the motor 131.
In this instance, the voltage Vlu across the winding 131-1 (U-winding) in sector #1 is as follows: $Vlu = 0 - Vnc = 0 - Vbus * \left(2/3-D/3\right) - Eu - Im * R 1 ,$ Vbus is a DC voltage, where R1 is a resistance of the winding 131-1, Eu = Vemf * cos(-60 degs) = 0.5Vemf.

The voltage Vlu across the winding 131-1 is also negative in this case, and the magnitude of the current 121-1 through the winding 131-1 is greater in magnitude for sector #1 of patterns 2, 3, 6, and 7 than as in patterns 0, 1, 4, and 5. For example, assuming that D = 60% or 0.6, the term [- Vbus * (2/3 -D/3)] is a greater negative value (or magnitude) than [- Vbus * D/3]. Thus, positive demagnetization occurs quicker for patterns 2, 3, 6, and 7, resulting in a shorter time duration TD1 in sector #1 for patterns 2, 3, 6, and 7 than for pattern 0, 1, 4, and 5.

Thus, for positive demagnetization associated with patterns 6 and 7, the controller 140: i) deactivates switches Q1 and Q2 coupled to a node N1 of the first winding 131-1 to decrease a magnitude of magnetic flux in the first winding 131-1 to zero between time T53-1 and T53-2; ii) applies a bus voltage Vbus to a node of the second winding 131-2 via activation of switch Q3; and iii) via switches Q5 and Q6, switches between applying the bus voltage Vbus to a node N3 of the third winding 131-3 and applying a ground reference voltage associated with the bus voltage to the node N3 of the third winding 131 in accordance with a first duty cycle D.

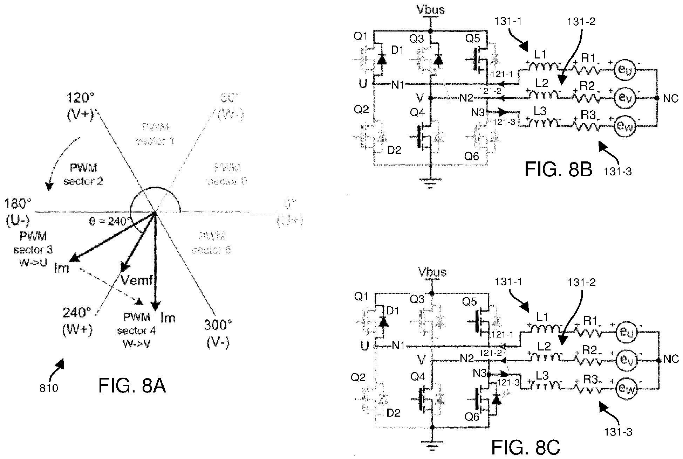

FIG. 8A is an example diagram illustrating operation of the motor in sector #1 during positive demagnetization.

The graph 810 in FIG. 8A illustrates negative current through the winding 131-1 (U-winding) and presence of a back electro-magnetic force (emf) voltage. For example, for winding 131-1 (a.k.a., U-winding), negative current/magnetic flux demagnetization happens at the beginning of the PWM sector #4 (around time T56-1 in FIG. 5). At that time, the winding 131-1 (U-winding) phase current starts with negative Im (a.k.a., current 121-1) and then increases to 0 (e.g., the V winding 131-2 starts with 0 current and then decreases to -Im; the W phase current stays at positive current Im).

In an ideal the BLDC motor control condition, the rotor back EMF voltage angle of the motor 131 is at 240 degrees. Assuming the back EMF to be sinusoidal voltage, the back EMF on each phase is as follows: $Eu = Vemf * cos \left(120 degs\right) = - 0.5 Vemf$ $Ev = Vemf * cos \left(240 degs\right) = - 0.5 Vemf$ $Ew = Vemf * cos \left(0 degs\right) = Vemf$

FIG. 8B is an example diagram illustrating implementation of a conventional pulse width modulation drive pattern during sector #4.

Implementation of the pulse width modulation patterns 2, 3, 4, and 5 result in a slow demagnetization in sector #1.

For example, the inverter 170 output for sector #4 (for patterns 2, 3, 4, and 5) is as follows: $Vu = Vbus ,$ where Vu is the voltage at node N1 of the motor 131; current 121-1 passes through inherent diode D1 of the switch Q1; $Vv = Vbus * \left(1-D\right) ,$ Vv is the voltage at node N2 of the motor 131 and where 1-D is the duty cycle of controlling switches Q3 and Q4, and $Vw = Vbus ,$ where Vw is the voltage at node N3 of the motor 131; switch Q5 is ON.
Thus, the voltage Vnc = Vbus * (1 - D/3), where the voltage Vnc is a magnitude of the voltage at the common node NC of the motor 131.
The voltage Vlu across the winding 131-1 (U-winding) in sector #1 is as follows: $Vlu = Vbus - Vnc = Vbus * D / 3 - Eu - Im * R 1 ,$ Vbus is a DC voltage, where R1 is a resistance of the winding 131-1, Eu = Vemf * cos(120 degs) = -0.5Vemf.

Since Vbus is a positive value, and Eu and Im are negative values in this case, the voltage Vlu across the first node N1 and second node NC of the winding 131-1 is positive, resulting in an increase of the magnitude of the negative current 121-1 to zero.

FIG. 8C is an example diagram illustrating implementation of a pulse width modulation drive pattern during sector #1.

Implementation of the pulse width modulation patterns 0, 1, 6, and 7 results in a faster positive demagnetization time in sector #1 than patterns 0, 1, 6, and 7.

For example, the inverter 170 output for sector #1 (for patterns 0, 1, 6, and 7) is as follows: $Vu = Vbus ,$ where Vu is the voltage at node N1 of the motor 131; current 121-1 passes from node N1 through inherent diode D1 of the switch Q1 to Vbus; $Vv = 0 ,$ where Vv is the voltage at node N2 of the motor 131; switch Q4 is ON, and $Vw = Vbus * D ,$ Vw is the voltage at node N3 of the motor 131 and where D is the duty cycle of controlling switches Q5 and Q6.
Thus, the voltage Vnc = Vbus * (1/3 + D/3), where the voltage Vnc is a magnitude of the voltage at the common node NC of the motor 131.
The voltage Vlu across the winding 131-1 (U-winding) in sector #1 is as follows: $Vlu = Vbus - Vnc = Vbus * \left(2/3-D/3\right) - Eu - Im * R 1 > 0 ,$ Vbus is a DC voltage, where R1 is a resistance of the winding 131-1, Eu = Vemf * cos(120 degs) = -0.5Vemf.

Thus, during the negative demagnetization of the first winding 131-1, the controller 140: i) deactivates the switches Q1 and Q2 coupled to the node N1 of the first winding 131-1 to decrease the magnitude of magnetic flux in the first winding 131-1 to zero; ii) applies the ground reference voltage to the node N2 of the second winding 131-2 via activation of the switch Q4; and iii) switches between applying the bus voltage Vbus to the node N3 of the third winding 131-3 and applying the ground reference voltage to the second node N3 of the third winding 131-3 in accordance with a second duty cycle (1-D).

The voltage Vlu across the winding 131-1 is also negative, and the magnitude of the current 121-1 through the winding 131-1 is greater in magnitude for sector #1 of patterns 0, 1, 6, and 7 than as in patterns 2, 3, 4, and 5. For example, the term Vbus * (2/3 -D/3) is a greater negative value than Vbus * D/3. Thus, negative demagnetization occurs quicker for patterns 0, 1, 6, and 7, resulting in a shorter time duration TD2 in sector #1 for patterns 0, 1, 6, and 7 than demagnetization times for patterns 2, 3, 4, and 5.

Accordingly, each of the multiple windings of the motor 131 are electrically connected to a common node NC. The controller 140 controls a magnitude of a voltage across a first winding 131-1 of the multiple windings to a first value (such as -Vbus * D/3) during positive demagnetization of the first winding 131-1 in the respective control cycle; the controller 131-1 controls a magnitude of the voltage across the first winding to a second value (such as Vbus * D/3) during negative demagnetization of the first winding 131-1. A magnitude of the second value may be substantially equal to a magnitude of the first value such that time duration TD1 is substantially equal to the time duration TD2.

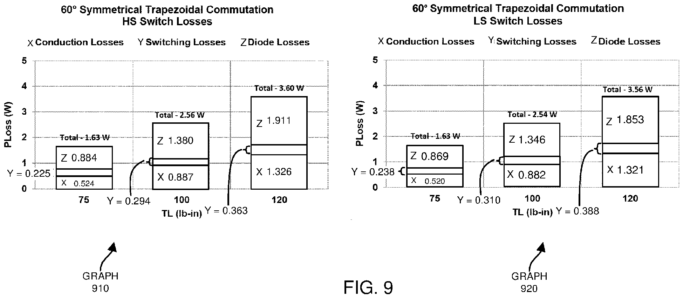

FIG. 9 is an example diagram illustrating high side switch circuitry and low side switch circuitry losses at different torque settings of the motor during application of PWM type 6.

Graph 910 illustrates different power losses associated with high side switch circuitry (such as switches Q1, Q3, and Q5) at different torque loads of the motor 131. For example, in a manner as previously discussed, the controller 140 implements the pulse width modulation pattern associated with PWM pattern type 6 or 7 to control operation of the motor 131. X represents power conduction losses of operating the respective switches Q1, Q3, and Q5; Y represents power switching losses of operating the respective switches Q1, Q3, and Q5; Z represents diode losses (power loss from inherent diodes associated with) switches Q1, Q3, and Q5.

Graph 920 illustrates different power losses associated with low side switch circuitry (such as switches Q2, Q4, and Q6) at different torque loads of the motor 131. For example, in a manner as previously discussed, the controller 140 implements the pulse width modulation pattern associated with PWM type 6 to control operation of the motor 131. X represents power conduction losses of operating the respective switches Q2, Q4, and Q6; Y represents power switching losses of operating the respective switches Q2, Q4, and Q6; Z represents diode losses (power loss from inherent diodes associated with) switches Q2, Q4, and Q6.

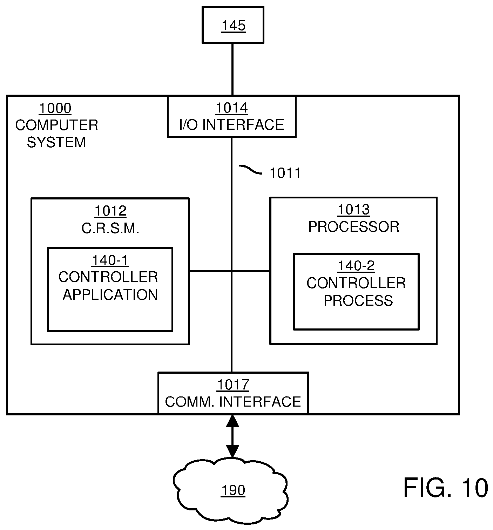

As previously discussed, implementation of the PWM type 6 or PWM type 7 control patterns (of FIG. 4) results in balancing (or equalizing) of positive demagnetization and negative demagnetization of one or more windings of motor 131 in each control cycle of operating the motor 131. As shown by graph 1010 and graph 1020, implementation of these control patterns (PWM type 6 or PWM type 7) and corresponding balancing results in substantially equal power losses with respect to high side switch circuitry (switches Q1, Q3, and Q5) and low side switch circuitry (switches Q2, Q4, Q6). The balance of power losses as shown in FIG. 10 reduces stress on the switches because it is balanced as opposed to an imbalance of heat being dissipated mostly by high side switch circuitry or low side switch circuitry. More specifically, at a torque of around 75 inch-pounds, the total power loss power of high side switch circuitry (Q1, Q3, and Q5) is 1.63 watts (X = 0.524, Y = 0.225, Z = 0.884), which is substantially equal to the total power loss power of low side switch circuitry (Q2, Q4, and Q6) is 1.63 watts (X = 0.520, Y = 0.238, Z = 0.869).

At a torque of around 100 inch-pounds, the total power loss power of high side switch circuitry (Q1, Q3, and Q5) is 2.56 watts (X = 0.887, Y = 0.294, Z = 1.380), which is substantially equal to the total power loss power of low side switch circuitry (Q2, Q4, and Q6) is 2.54 watts (X = 0.882, Y = 0.310, Z = 1.346).

At a torque of around 120 inch-pounds, the total power loss power of high side switch circuitry (Q1, Q3, and Q5) is 3.60 watts (X = 1.326, Y = 0.363, Z = 1.911), which is substantially equal to the total power loss power of low side switch circuitry (Q2, Q4, and Q6) is 3.56 watts (X = 1.321, Y = 0.388, Z = 1.853).

FIG. 10 is an example block diagram of a computer device for implementing any of the operations as discussed herein.

As shown, computer system 1000 (such as implemented by any of one or more resources such as controller 140, signal generator 145, etc.) of the present example includes an interconnect 1011 that couples computer readable storage media 1012 such as a non-transitory type of media (or hardware storage media) in which digital information can be stored and retrieved, a processor 1013 (e.g., computer processor hardware such as one or more processor devices), I/O interface 1014, and a communications interface 1017.

I/O interface 1014 provides connectivity to any suitable circuitry or component such as user interface 115, winding 131, amplifier 145, etc.

Computer readable storage medium 1012 can be any hardware storage resource or device such as memory, optical storage, hard drive, floppy disk, etc. The computer readable storage medium 1012 can be configured to store instructions and/or data used by the controller application 140-1 to perform any of the operations as described herein.

Further in this example, communications interface 1017 enables the computer system 1000 and processor 1013 to communicate over a resource such as network 190 to retrieve information from remote sources and communicate with other computers.

As shown, computer readable storage media 1012 is encoded with controller application 140-1 (e.g., software, firmware, etc.) executed by processor 1013. Controller application 140-1 can be configured to include instructions to implement any of the operations as discussed herein.

During operation, processor 1013 accesses computer readable storage media 1012 via the use of interconnect 1011 in order to launch, run, execute, interpret or otherwise perform the instructions in controller application 140-1 stored on computer readable storage medium 1012.

Execution of the controller application 140-1 produces processing functionality such as controller process 140-2 in processor 1013. In other words, the controller process 140-2 associated with processor 1013 represents one or more aspects of executing controller application 140-1 within or upon the processor 1013 in the computer system 1000.

Note that computer system 1000 can be a micro-controller device, logic, hardware processor, hybrid analog/digital circuitry, etc., configured to control a power supply and perform any of the operations as described herein.

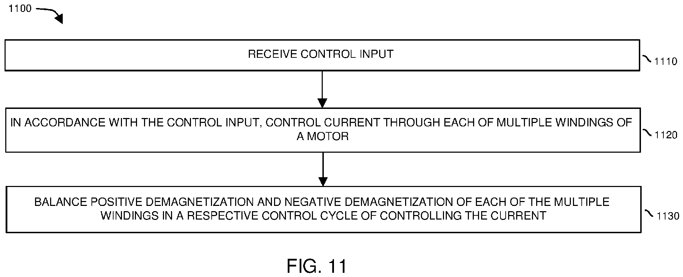

Functionality supported by the different resources will now be discussed via flowchart 1100 in FIG. 11. Note that the steps in the flowcharts below can be executed in any suitable order.

FIG. 11 is an example diagram illustrating a method of controlling a power converter.

In processing operation 1110, the controller 140 receives control input 104.

In processing operation 1120, in accordance with the control input 104, the controller 140 controls current through each of the multiple windings 131-1, 131-2, and 131-3 of motor 131.

In processing operation, via generation of control signals 105 and pulse width modulation signals (such as associated with the PWM type 6 and PWM type 7), as discussed herein, the controller 140 balances positive demagnetization and negative demagnetization of each of the multiple windings of the motor 131 in a respective control cycle of controlling the current.

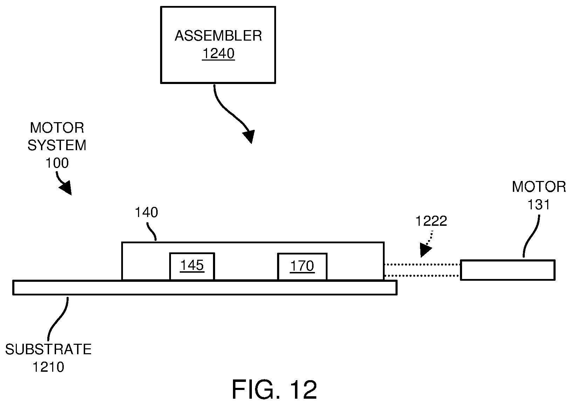

FIG. 12 is an example diagram illustrating assembly of a control system (such as a circuit).

As shown, assembler 1240 receives a substrate 1210 and corresponding components of system 100 such as one or more of controller 140, signal generator 145, inverter 170 (such as one or more sets of switches), etc. The assembler 1240 affixes (couples) components associated with the controller 140 and other components such as signal generator 145, inverter 170, etc., to the substrate 1210.

Via one or more respective circuit paths (such as traces, cables, wiring, etc.) as described herein, the fabricator 1240 provides connectivity between one or more components such as controller 140, signal generator 145, inverter 170, etc. Note further that components such as the signal generator 145, inverter 170, etc., can be affixed or coupled to the substrate 1210 in any suitable manner. For example, one or more of the components in motor system 100 can be soldered to the substrate 1210, inserted into sockets disposed on the substrate 1210, etc.

Additionally, note that the substrate 1210 is optional. Any of one or more circuit paths or connectivity as shown in the above drawings and as described herein can be disposed in cables, flexible substrates, or other suitable media.

The motor 131 is disposed on its own assembly independent of substrate 1210; the substrate or housing of the motor 131 is directly or indirectly connected to the substrate 1210 via wires, cables, links, etc. The controller 140 or any portion of the motor system 100 can be disposed on a standalone smaller board plugged into a socket of the substrate 1210 as well.

As previously discussed, via one or more circuit paths 1222 (such as one or more traces, cables, connectors, wires, conductors, electrically conductive paths, etc.), the assembler 1240 couples the system 100 and corresponding components to the motor 131 and corresponding windings. The circuit path 1222 conveys current 121-1, 121-2, 121-3, etc., from an input voltage source such as Vbus and ground reference voltage to the motor 131 as controlled by switches in inverter 170.

Accordingly, this disclosure includes a system comprising: a substrate 1210 (such as a circuit board, standalone board, mother board, standalone board destined to be coupled to a mother board, host, etc.); a system 100 of corresponding components (such as associated with controller 140, signal generator 145, inverter 170, etc.) as described herein; and at least one winding (such as a motor, winding, etc.).

Note again that techniques herein are well suited for use in circuit applications such as those that control supply current to multiple motor windings. However, it should be noted that the concepts in this disclosure are not limited to use in such applications and that the techniques discussed herein are well suited for other applications as well.

Based on the description set forth herein, numerous specific details have been set forth to provide a thorough understanding of claimed subject matter. However, it will be understood by those skilled in the art that claimed subject matter may be practiced without these specific details. In other instances, methods, apparatuses, systems, etc., that would be known by one of ordinary skill have not been described in detail so as not to obscure claimed subject matter. Some portions of the detailed description have been presented in terms of algorithms or symbolic representations of operations on data bits or binary digital signals stored within a computing system memory, such as a computer memory. These algorithmic descriptions or representations are examples of techniques used by those of ordinary skill in the data processing arts to convey the substance of their work to others skilled in the art. An algorithm as described herein, and generally, is considered to be a self-consistent sequence of operations or similar processing leading to a desired result. In this context, operations or processing involve physical manipulation of physical quantities. Typically, although not necessarily, such quantities may take the form of electrical or magnetic signals capable of being stored, transferred, combined, compared or otherwise manipulated. It has been convenient at times, principally for reasons of common usage, to refer to such signals as bits, data, values, elements, symbols, characters, terms, numbers, numerals or the like. It should be understood, however, that all of these and similar terms are to be associated with appropriate physical quantities and are merely convenient labels. Unless specifically stated otherwise, as apparent from the following discussion, it is appreciated that throughout this specification discussions utilizing terms such as "processing," "computing," "calculating," "determining" or the like refer to actions or processes of a computing platform, such as a computer or a similar electronic computing device, that manipulates or transforms data represented as physical electronic or magnetic quantities within memories, registers, or other information storage devices, transmission devices, or display devices of the computing platform.

It will be understood by those skilled in the art that various changes in form and details may be made therein without departing from the scope of the present application as defined by the appended claims.

## Claims

1. An apparatus comprising:
a controller (140); and
three current drivers including a first current driver having first high side switch circuitry (Q1) and first low side switch circuitry (Q2), a second current driver having second high side switch circuity and second low side switch circuitry (Q4), and a third current driver having third high side switch circuitry (Q5) and third low side switch circuitry (Q6), the three current drivers controlled by the controller and operative to supply the current through each of three windings (131) of a motor;
wherein the controller (140) is operative to:
receive a control input (105);
in accordance with the control input (105), control current through each of the three windings (131) of a motor according to one of a first pulse width modulation pattern and a second pulse width modulation pattern comprising sectors each corresponding to 60 degrees of rotation and configured to balance positive demagnetization and negative demagnetization of at least one winding of the three windings (131) in a respective control cycle of controlling the current,;
**characterized in that** the first pulse width modulation pattern comprises:
during a sector #0: i) toggle first high side switch circuitry (Q1) and first low side switch circuitry (Q2) between ON and OFF states; ii) deactivate both second high side switch circuitry (Q3) and second low side switch circuitry (Q4), and iii) deactivate third high side switch circuitry (Q5) and activate third low side switch circuitry (Q6);
during a sector #1: i) toggle third high side switch circuitry (Q5) and third low side switch circuitry (Q6) between ON and OFF states; ii) deactivate both of first high side switch circuitry (Q1) and first low side switch circuitry (Q2), and iii) activate second high side switch circuitry (Q3) and deactivate s second low side switch circuitry (Q4);
during a sector #2: i) toggle second high side switch circuitry (Q3) and second low side switch circuitry (Q4) between ON and OFF states; ii) deactivate both of third high side switch circuitry (Q5) and third low side switch circuitry (Q6), and iii) deactivate first high side switch circuitry (Q1) and activate first low side switch circuitry (Q2);
during a sector #3: i) toggle first high side switch circuitry (Q1) and first low side switch circuitry (Q2) between ON and OFF states; ii) deactivate both of second high side switch circuitry (Q3) and second low side switch circuitry (Q4), and iii) activate third high side switch circuitry (Q5) and deactivate switch third low side switch circuitry (Q6);
during a sector #4: i) toggle third high side switch circuitry (Q5) and third low side switch circuitry (Q6) between ON and OFF states; ii) deactivate both of first high side switch circuitry (Q1) and first low side switch circuitry (Q2), and iii) deactivate second high side switch circuitry (Q3) and activate second low side switch circuitry (Q4);
during sector #5: i) toggle second high side switch circuitry (Q3) and second low side switch circuitry (Q4) between ON and OFF states; ii) deactivate both of third high side switch circuitry (Q5) and third low side switch circuitry (Q6), and iii) activate first high side switch circuitry (Q1) and deactivates first low side switch circuitry (Q2)
and **in that** the second pulse width modulation pattern comprises:
during a sector #0: i) toggle first high side switch circuitry (Q1) between ON and OFF states and deactivate first low side switch circuitry (Q2); ii) deactivate both second high side switch circuitry (Q3) and second low side switch circuitry (Q4), and iii) deactivate third high side switch circuitry (Q5) and activate third low side switch circuitry (Q6);
during a sector #1: i) toggle third low side switch circuitry (Q6) between ON and OFF states and deactivate third high side switch circuitry (Q5); ii) deactivate both of first high side switch circuitry (Q1) and first low side switch circuitry (Q2), and iii) activate second high side switch circuitry (Q3) and deactivate s second low side switch circuitry (Q4);
during a sector #2: i) toggle second high side switch circuitry (Q3) between ON and OFF states and deactivate second low side switch circuitry (Q4); ii) deactivate both of third high side switch circuitry (Q5) and third low side switch circuitry (Q6), and iii) deactivate first high side switch circuitry (Q1) and activate first low side switch circuitry (Q2);
during a sector #3: i) toggle first low side switch circuitry (Q2) between ON and OFF states and deactivate first high side switch circuitry (Q1); ii) deactivate both of second high side switch circuitry (Q3) and second low side switch circuitry (Q4), and iii) activate third high side switch circuitry (Q5) and deactivate switch third low side switch circuitry (Q6);
during a sector #4: i) toggle third high side switch circuitry (Q5) between ON and OFF states and deactivate third low side switch circuitry (Q6); ii) deactivate both of first high side switch circuitry (Q1) and first low side switch circuitry (Q2), and iii) deactivate second high side switch circuitry (Q3) and activate second low side switch circuitry (Q4);
during sector #5: i) toggle second low side switch circuitry (Q4) between ON and OFF states and deactivate second high side switch circuitry (Q3); ii) deactivate both of third high side switch circuitry (Q5) and third low side switch circuitry (Q6), and iii) activate first high side switch circuitry (Q1) and deactivates first low side switch circuitry (Q2).

2. The apparatus as in claim 1, wherein each of the three windings (131) are electrically connected to a common node.

3. The apparatus as in claim 1, wherein the three windings (131) include a first winding (131-1), a second winding (131-2), and a third winding (131-3); and
wherein a first node of the first winding (131-1), a first node of the second winding (131-2), and a first node of the third winding (131-3) are electrically connected to each other.

4. A system comprising:
a circuit substrate (1210);
the apparatus of any one of claims 1 to 3 coupled to the circuit substrate (1210).

5. A method comprising:
receiving control input (105);
in accordance with the control input (105), controlling current through each of three windings (131) of a motor by controlling three current drivers including a first current driver having first high side switch circuitry (Q1) and first low side switch circuitry (Q2), a second current driver having second high side switch circuity and second low side switch circuitry (Q4), and a third current driver having third high side switch circuitry (Q5) and third low side switch circuitry (Q6) according to one of a first pulse width modulation pattern and a second pulse width modulation pattern comprising sectors each corresponding to 60 degrees of rotation and configured to balancing positive demagnetization and negative demagnetization of at least one winding of the three windings (131) in a respective control cycle of controlling the current,
**characterized in that** the first pulse width modulation pattern comprises:
during a sector #0: i) toggle first high side switch circuitry (Q1) and first low side switch circuitry (Q2) between ON and OFF states; ii) deactivate both second high side switch circuitry (Q3) and second low side switch circuitry (Q4), and iii) deactivate third high side switch circuitry (Q5) and activate third low side switch circuitry (Q6);
during a sector #1: i) toggle third high side switch circuitry (Q5) and third low side switch circuitry (Q6) between ON and OFF states; ii) deactivate both of first high side switch circuitry (Q1) and first low side switch circuitry (Q2), and iii) activate second high side switch circuitry (Q3) and deactivate s second low side switch circuitry (Q4);
during a sector #2: i) toggle second high side switch circuitry (Q3) and second low side switch circuitry (Q4) between ON and OFF states; ii) deactivate both of third high side switch circuitry (Q5) and third low side switch circuitry (Q6), and iii) deactivate first high side switch circuitry (Q1) and activate first low side switch circuitry (Q2);
during a sector #3: i) toggle first high side switch circuitry (Q1) and first low side switch circuitry (Q2) between ON and OFF states; ii) deactivate both of second high side switch circuitry (Q3) and second low side switch circuitry (Q4), and iii) activate third high side switch circuitry (Q5) and deactivate switch third low side switch circuitry (Q6);
during a sector #4: i) toggle third high side switch circuitry (Q5) and third low side switch circuitry (Q6) between ON and OFF states; ii) deactivate both of first high side switch circuitry (Q1) and first low side switch circuitry (Q2), and iii) deactivate second high side switch circuitry (Q3) and activate second low side switch circuitry (Q4);
during sector #5: i) toggle second high side switch circuitry (Q3) and second low side switch circuitry (Q4) between ON and OFF states; ii) deactivate both of third high side switch circuitry (Q5) and third low side switch circuitry (Q6), and iii) activate first high side switch circuitry (Q1) and deactivates first low side switch circuitry (Q2)
and **in that** the second pulse width modulation pattern comprises:
during a sector #0: i) toggle first high side switch circuitry (Q1) between ON and OFF states and deactivate first low side switch circuitry (Q2); ii) deactivate both second high side switch circuitry (Q3) and second low side switch circuitry (Q4), and iii) deactivate third high side switch circuitry (Q5) and activate third low side switch circuitry (Q6);
during a sector #1: i) toggle third low side switch circuitry (Q6) between ON and OFF states and deactivate third high side switch circuitry (Q5); ii) deactivate both of first high side switch circuitry (Q1) and first low side switch circuitry (Q2), and iii) activate second high side switch circuitry (Q3) and deactivate s second low side switch circuitry (Q4);
during a sector #2: i) toggle second high side switch circuitry (Q3) between ON and OFF states and deactivate second low side switch circuitry (Q4); ii) deactivate both of third high side switch circuitry (Q5) and third low side switch circuitry (Q6), and iii) deactivate first high side switch circuitry (Q1) and activate first low side switch circuitry (Q2);
during a sector #3: i) toggle first low side switch circuitry (Q2) between ON and OFF states and deactivate first high side switch circuitry (Q1); ii) deactivate both of second high side switch circuitry (Q3) and second low side switch circuitry (Q4), and iii) activate third high side switch circuitry (Q5) and deactivate switch third low side switch circuitry (Q6);
during a sector #4: i) toggle third high side switch circuitry (Q5) between ON and OFF states and deactivate third low side switch circuitry (Q6); ii) deactivate both of first high side switch circuitry (Q1) and first low side switch circuitry (Q2), and iii) deactivate second high side switch circuitry (Q3) and activate second low side switch circuitry (Q4);
during sector #5: i) toggle second low side switch circuitry (Q4) between ON and OFF states and deactivate second high side switch circuitry (Q3); ii) deactivate both of third high side switch circuitry (Q5) and third low side switch circuitry (Q6), and iii) activate first high side switch circuitry (Q1) and deactivates first low side switch circuitry (Q2).

## Patentansprüche

1. Vorrichtung, umfassend:
eine Steuerung (140); und
drei Stromtreiber, einschließlich eines ersten Stromtreibers mit einer ersten High-Side-Schalterschaltung (Q1) und einer ersten Low-Side-Schalterschaltung (Q2), eines zweiten Stromtreibers mit einer zweiten High-Side-Schalterschaltung und einer zweiten Low-Side-Schalterschaltung (Q4) und eines dritten Stromtreibers mit einer dritten High-Side-Schalterschaltung (Q5) und einer dritten Low-Side-Schalterschaltung (Q6), wobei die drei Stromtreiber durch die Steuerung gesteuert werden und betreibbar sind, um den Strom durch jede von drei Wicklungen (131) eines Motors zu liefern;
wobei die Steuerung (140) betreibbar ist, um:
eine Steuereingabe (105) zu empfangen;
gemäß der Steuereingabe (105), Strom durch jede der drei Wicklungen (131) eines Motors gemäß einem von einem ersten Pulsbreitenmodulationsmuster und einem zweiten Pulsbreitenmodulationsmuster zu steuern, umfassend Sektoren, die jeweils 60 Grad Drehung entsprechen und konfiguriert sind, um positive Entmagnetisierung und negative Entmagnetisierung von mindestens einer Wicklung der drei Wicklungen (131) in einem jeweiligen Steuerzyklus des Steuerns des Stroms auszugleichen;
**dadurch gekennzeichnet, dass** das erste Pulsbreitenmodulationsmuster umfasst:
während eines Sektors #0: i) Umschalten der ersten High-Side-Schalterschaltung (Q1) und der ersten Low-Side-Schalterschaltung (Q2) zwischen EIN- und AUS-Zuständen; ii) Deaktivieren sowohl der zweiten High-Side-Schalterschaltung (Q3) als auch der zweiten Low-Side-Schalterschaltung (Q4) und iii) Deaktivieren der dritten High-Side-Schalterschaltung (Q5) und Aktivieren der dritten Low-Side-Schalterschaltung (Q6);
während eines Sektors #1: i) Umschalten der dritten High-Side-Schalterschaltung (Q5) und der dritten Low-Side-Schalterschaltung (Q6) zwischen EIN- und AUS-Zuständen; ii) Deaktivieren sowohl der ersten High-Side-Schalterschaltung (Q1) als auch der ersten Low-Side-Schalterschaltung (Q2) und iii) Aktivieren der zweiten High-Side-Schalterschaltung (Q3) und Deaktivieren der zweiten Low-Side-Schalterschaltung (Q4);
während eines Sektors #2: i) Umschalten der zweiten High-Side-Schalterschaltung (Q3) und der zweiten Low-Side-Schalterschaltung (Q4) zwischen EIN- und AUS-Zuständen; ii) Deaktivieren sowohl der dritten High-Side-Schalterschaltung (Q5) als auch der dritten Low-Side-Schalterschaltung (Q6) und iii) Deaktivieren der ersten High-Side-Schalterschaltung (Q1) und Aktivieren der ersten Low-Side-Schalterschaltung (Q2);
während eines Sektors #3: i) Umschalten der ersten High-Side-Schalterschaltung (Q1) und der ersten Low-Side-Schalterschaltung (Q2) zwischen EIN- und AUS-Zuständen; ii) Deaktivieren sowohl der zweiten High-Side-Schalterschaltung (Q3) als auch der zweiten Low-Side-Schalterschaltung (Q4) und iii) Aktivieren der dritten High-Side-Schalterschaltung (Q5) und Deaktivieren der dritten Low-Side-Schalterschaltung (Q6);
während eines Sektors #4: i) Umschalten der dritten High-Side-Schalterschaltung (Q5) und der dritten Low-Side-Schalterschaltung (Q6) zwischen EIN- und AUS-Zuständen; ii) Deaktivieren sowohl der ersten High-Side-Schalterschaltung (Q1) als auch der ersten Low-Side-Schalterschaltung (Q2) und iii) Deaktivieren der zweiten High-Side-Schalterschaltung (Q3) und Aktivieren der zweiten Low-Side-Schalterschaltung (Q4);
während eines Sektors #5: i) Umschalten der zweiten High-Side-Schalterschaltung (Q3) und der zweiten Low-Side-Schalterschaltung (Q4) zwischen EIN- und AUS-Zuständen; ii) Deaktivieren sowohl der dritten High-Side-Schalterschaltung (Q5) als auch der dritten Low-Side-Schalterschaltung (Q6) und iii) Aktivieren der ersten High-Side-Schalterschaltung (Q1) und Deaktivieren der ersten Low-Side-Schalterschaltung (Q2)
und dadurch, dass das zweite Pulsbreitenmodulationsmuster umfasst:
während eines Sektors #0: i) Umschalten der ersten High-Side-Schalterschaltung (Q1) zwischen EIN- und AUS-Zuständen und Deaktivieren der ersten Low-Side-Schalterschaltung (Q2); ii) Deaktivieren sowohl der zweiten High-Side-Schalterschaltung (Q3) als auch der zweiten Low-Side-Schalterschaltung (Q4) und iii) Deaktivieren der dritten High-Side-Schalterschaltung (Q5) und Aktivieren der dritten Low-Side-Schalterschaltung (Q6);
während eines Sektors #1: i) Umschalten der dritten Low-Side-Schalterschaltung (Q6) zwischen EIN- und AUS-Zuständen und Deaktivieren der dritten High-Side-Schalterschaltung (Q5); ii) Deaktivieren sowohl der ersten High-Side-Schalterschaltung (Q1) als auch der ersten Low-Side-Schalterschaltung (Q2) und iii) Aktivieren der zweiten High-Side-Schalterschaltung (Q3) und Deaktivieren der zweiten Low-Side-Schalterschaltung (Q4);
während eines Sektors #2: i) Umschalten der zweiten High-Side-Schalterschaltung (Q3) zwischen EIN- und AUS-Zuständen und Deaktivieren der zweiten Low-Side-Schalterschaltung (Q4); ii) Deaktivieren sowohl der dritten High-Side-Schalterschaltung (Q5) als auch der dritten Low-Side-Schalterschaltung (Q6) und iii) Deaktivieren der ersten High-Side-Schalterschaltung (Q1) und Aktivieren der ersten Low-Side-Schalterschaltung (Q2);
während eines Sektors #3: i) Umschalten der ersten Low-Side-Schalterschaltung (Q2) zwischen EIN- und AUS-Zuständen und Deaktivieren der ersten High-Side-Schalterschaltung (Q1); ii) Deaktivieren sowohl der zweiten High-Side-Schalterschaltung (Q3) als auch der zweiten Low-Side-Schalterschaltung (Q4) und iii) Aktivieren der dritten High-Side-Schalterschaltung (Q5) und Deaktivieren der dritten Low-Side-Schalterschaltung (Q6);
während eines Sektors #4: i) Umschalten der dritten High-Side-Schalterschaltung (Q5) zwischen EIN- und AUS-Zuständen und Deaktivieren der dritten Low-Side-Schalterschaltung (Q6); ii) Deaktivieren sowohl der ersten High-Side-Schalterschaltung (Q1) als auch der ersten Low-Side-Schalterschaltung (Q2) und iii) Deaktivieren der zweiten High-Side-Schalterschaltung (Q3) und Aktivieren der zweiten Low-Side-Schalterschaltung (Q4);
während eines Sektors #5: i) Umschalten der zweiten Low-Side-Schalterschaltung (Q4) zwischen EIN- und AUS-Zuständen und Deaktivieren der zweiten High-Side-Schalterschaltung (Q3); ii) Deaktivieren sowohl der dritten High-Side-Schalterschaltung (Q5) als auch der dritten Low-Side-Schalterschaltung (Q6) und iii) Aktivieren der ersten High-Side-Schalterschaltung (Q1) und Deaktivieren der ersten Low-Side-Schalterschaltung (Q2).

2. Vorrichtung nach Anspruch 1, wobei jede der drei Wicklungen (131) elektrisch mit einem gemeinsamen Knoten verbunden ist.

3. Vorrichtung nach Anspruch 1, wobei die drei Wicklungen (131) eine erste Wicklung (131-1), eine zweite Wicklung (131-2) und eine dritte Wicklung (131-3) umfassen; und
wobei ein erster Knoten der ersten Wicklung (131-1), ein erster Knoten der zweiten Wicklung (131-2) und ein erster Knoten der dritten Wicklung (131-3) elektrisch miteinander verbunden sind.

4. System, umfassend:
ein Schaltungssubstrat (1210);
die Vorrichtung nach einem der Ansprüche 1 bis 3, die mit dem Schaltungssubstrat (1210) gekoppelt ist.

5. Verfahren, umfassend:
Empfangen einer Steuereingabe (105);
gemäß der Steuereingabe (105), Steuern von Strom durch jede von drei Wicklungen (131) eines Motors durch Steuern von drei Stromtreibern, einschließlich eines ersten Stromtreibers mit einer ersten High-Side-Schalterschaltung (Q1) und einer ersten Low-Side-Schalterschaltung (Q2), eines zweiten Stromtreibers mit einer zweiten High-Side-Schalterschaltung und einer zweiten Low-Side-Schalterschaltung (Q4) und eines dritten Stromtreibers mit einer dritten High-Side-Schalterschaltung (Q5) und einer dritten Low-Side-Schalterschaltung (Q6) gemäß einem von einem ersten Pulsbreitenmodulationsmuster und einem zweiten Pulsbreitenmodulationsmuster, umfassend Sektoren, die jeweils 60 Grad Drehung entsprechen und konfiguriert sind, um positive Entmagnetisierung und negative Entmagnetisierung von mindestens einer Wicklung der drei Wicklungen (131) in einem jeweiligen Steuerzyklus des Steuerns des Stroms auszugleichen,
**dadurch gekennzeichnet, dass** das erste Pulsbreitenmodulationsmuster umfasst:
während eines Sektors #0: i) Umschalten der ersten High-Side-Schalterschaltung (Q1) und der ersten Low-Side-Schalterschaltung (Q2) zwischen EIN- und AUS-Zuständen; ii) Deaktivieren sowohl der zweiten High-Side-Schalterschaltung (Q3) als auch der zweiten Low-Side-Schalterschaltung (Q4) und iii) Deaktivieren der dritten High-Side-Schalterschaltung (Q5) und Aktivieren der dritten Low-Side-Schalterschaltung (Q6);
während eines Sektors #1: i) Umschalten der dritten High-Side-Schalterschaltung (Q5) und der dritten Low-Side-Schalterschaltung (Q6) zwischen EIN- und AUS-Zuständen; ii) Deaktivieren sowohl der ersten High-Side-Schalterschaltung (Q1) als auch der ersten Low-Side-Schalterschaltung (Q2) und iii) Aktivieren der zweiten High-Side-Schalterschaltung (Q3) und Deaktivieren der zweiten Low-Side-Schalterschaltung (Q4);
während eines Sektors #2: i) Umschalten der zweiten High-Side-Schalterschaltung (Q3) und der zweiten Low-Side-Schalterschaltung (Q4) zwischen EIN- und AUS-Zuständen; ii) Deaktivieren sowohl der dritten High-Side-Schalterschaltung (Q5) als auch der dritten Low-Side-Schalterschaltung (Q6) und iii) Deaktivieren der ersten High-Side-Schalterschaltung (Q1) und Aktivieren der ersten Low-Side-Schalterschaltung (Q2);
während eines Sektors #3: i) Umschalten der ersten High-Side-Schalterschaltung (Q1) und der ersten Low-Side-Schalterschaltung (Q2) zwischen EIN- und AUS-Zuständen; ii) Deaktivieren sowohl der zweiten High-Side-Schalterschaltung (Q3) als auch der zweiten Low-Side-Schalterschaltung (Q4) und iii) Aktivieren der dritten High-Side-Schalterschaltung (Q5) und Deaktivieren der dritten Low-Side-Schalterschaltung (Q6);
während eines Sektors #4: i) Umschalten der dritten High-Side-Schalterschaltung (Q5) und der dritten Low-Side-Schalterschaltung (Q6) zwischen EIN- und AUS-Zuständen; ii) Deaktivieren sowohl der ersten High-Side-Schalterschaltung (Q1) als auch der ersten Low-Side-Schalterschaltung (Q2) und iii) Deaktivieren der zweiten High-Side-Schalterschaltung (Q3) und Aktivieren der zweiten Low-Side-Schalterschaltung (Q4);
während eines Sektors #5: i) Umschalten der zweiten High-Side-Schalterschaltung (Q3) und der zweiten Low-Side-Schalterschaltung (Q4) zwischen EIN- und AUS-Zuständen; ii) Deaktivieren sowohl der dritten High-Side-Schalterschaltung (Q5) als auch der dritten Low-Side-Schalterschaltung (Q6) und iii) Aktivieren der ersten High-Side-Schalterschaltung (Q1) und Deaktivieren der ersten Low-Side-Schalterschaltung (Q2)
und dadurch, dass das zweite Pulsbreitenmodulationsmuster umfasst:
während eines Sektors #0: i) Umschalten der ersten High-Side-Schalterschaltung (Q1) zwischen EIN- und AUS-Zuständen und Deaktivieren der ersten Low-Side-Schalterschaltung (Q2); ii) Deaktivieren sowohl der zweiten High-Side-Schalterschaltung (Q3) als auch der zweiten Low-Side-Schalterschaltung (Q4) und iii) Deaktivieren der dritten High-Side-Schalterschaltung (Q5) und Aktivieren der dritten Low-Side-Schalterschaltung (Q6);
während eines Sektors #1: i) Umschalten der dritten Low-Side-Schalterschaltung (Q6) zwischen EIN- und AUS-Zuständen und Deaktivieren der dritten High-Side-Schalterschaltung (Q5); ii) Deaktivieren sowohl der ersten High-Side-Schalterschaltung (Q1) als auch der ersten Low-Side-Schalterschaltung (Q2) und iii) Aktivieren der zweiten High-Side-Schalterschaltung (Q3) und Deaktivieren der zweiten Low-Side-Schalterschaltung (Q4);
während eines Sektors #2: i) Umschalten der zweiten High-Side-Schalterschaltung (Q3) zwischen EIN- und AUS-Zuständen und Deaktivieren der zweiten Low-Side-Schalterschaltung (Q4); ii) Deaktivieren sowohl der dritten High-Side-Schalterschaltung (Q5) als auch der dritten Low-Side-Schalterschaltung (Q6) und iii) Deaktivieren der ersten High-Side-Schalterschaltung (Q1) und Aktivieren der ersten Low-Side-Schalterschaltung (Q2);
während eines Sektors #3: i) Umschalten der ersten Low-Side-Schalterschaltung (Q2) zwischen EIN- und AUS-Zuständen und Deaktivieren der ersten High-Side-Schalterschaltung (Q1); ii) Deaktivieren sowohl der zweiten High-Side-Schalterschaltung (Q3) als auch der zweiten Low-Side-Schalterschaltung (Q4) und iii) Aktivieren der dritten High-Side-Schalterschaltung (Q5) und Deaktivieren der dritten Low-Side-Schalterschaltung (Q6);
während eines Sektors #4: i) Umschalten der dritten High-Side-Schalterschaltung (Q5) zwischen EIN- und AUS-Zuständen und Deaktivieren der dritten Low-Side-Schalterschaltung (Q6); ii) Deaktivieren sowohl der ersten High-Side-Schalterschaltung (Q1) als auch der ersten Low-Side-Schalterschaltung (Q2) und iii) Deaktivieren der zweiten High-Side-Schalterschaltung (Q3) und Aktivieren der zweiten Low-Side-Schalterschaltung (Q4);
während eines Sektors #5: i) Umschalten der zweiten Low-Side-Schalterschaltung (Q4) zwischen EIN- und AUS-Zuständen und Deaktivieren der zweiten High-Side-Schalterschaltung (Q3); ii) Deaktivieren sowohl der dritten High-Side-Schalterschaltung (Q5) als auch der dritten Low-Side-Schalterschaltung (Q6) und iii) Aktivieren der ersten High-Side-Schalterschaltung (Q1) und Deaktivieren der ersten Low-Side-Schalterschaltung (Q2).

## Revendications

1. Un montage comprenant :
une unité (140) de commande ; et
trois attaqueurs de courant comprenant un premier attaqueur de courant ayant un premier circuit (Q1) interrupteur de côté haut et un premier circuit (Q2) interrupteur de côté bas, un deuxième attaqueur de courant ayant un deuxième circuit interrupteur de côté haut et un deuxième circuit (Q4) interrupteur de côté bas et un troisième attaqueur de courant ayant un troisième circuit (Q5) interrupteur de côté haut et un troisième circuit (Q6) interrupteur de côté bas, les trois attaqueurs de courant étant commandés par l'unité de commande et propres à envoyer le courant dans chacun des trois enroulements (131) d'un moteur ;
dans lequel l'unité (140) de commande est propre à :
recevoir une entrée (105) de commande ;
en accord avec l'entrée (105) de commande, commander du courant dans chacun des trois enroulements (131) d'un moteur suivant une première configuration de modulation à largeur d'impulsion et une deuxième configuration de modulation à largeur d'impulsion comprenant des secteurs correspondants chacun à une rotation de 60 degrés et configurés pour équilibrer une démagnétisation positive et une démagnétisation négative d'au moins un enroulement des trois enroulements (131) dans un cycle respectif de commande du courant ;
**caractérisé en ce que** la première configuration de modulation à largeur d'impulsion comprend :
pendant un secteur #0: i), basculer un premier circuit (Q1) interrupteur de côté haut et un premier circuit (Q2) interrupteur de côté bas entre des états fermés et ouverts ; ii) désactiver à la fois le deuxième circuit (Q3) interrupteur de côté haut et le deuxième circuit (Q4) interrupteur de côté bas, et iii) désactiver le troisième circuit (Q5) interrupteur de côté haut et activer le troisième circuit (Q6) interrupteur de côté bas ;
pendant un secteur #1: i), basculer le troisième circuit (Q5) interrupteur de côté haut et le troisième circuit (Q6) interrupteur de côté bas entre des états fermés et ouverts ; ii) désactiver à la fois le premier circuit (Q1) interrupteur de côté haut et le premier circuit (Q2) interrupteur de côté bas, et iii) activer le deuxième circuit (Q3) interrupteur de côté haut et désactiver le deuxième circuit (Q4) interrupteur de côté bas ;
pendant un secteur #2: i), basculer le deuxième circuit (Q3) interrupteur de côté haut et le deuxième circuit (Q4) interrupteur de côté bas entre des états fermés et ouverts ; ii) désactiver à la fois le premier circuit (Q5) interrupteur de côté haut et le troisième circuit (Q6) interrupteur de côté bas, et iii) désactiver le premier circuit (Q1) interrupteur de côté haut et activer le premier circuit (Q2) interrupteur de côté bas ;
pendant un secteur #3: i), basculer le premier circuit (Q1) interrupteur de côté haut et le premier circuit (Q2) interrupteur de côté bas entre des états fermés et ouverts ; ii) désactiver à la fois le deuxième circuit (Q3) interrupteur de côté haut et le deuxième circuit (Q4) interrupteur de côté bas, et iii) activer le troisième circuit (Q5) interrupteur de côté haut et désactiver le troisième circuit (Q6) interrupteur de côté bas ;
pendant un secteur #4: i), basculer le troisième circuit (Q5) interrupteur de côté haut et le troisième circuit (Q6) interrupteur de côté bas entre des états fermés et ouverts ; ii) désactiver à la fois le premier circuit (Q1) interrupteur de côté haut et le premier circuit (Q2) interrupteur de côté bas, et iii) désactiver le deuxième circuit (Q3) interrupteur de côté haut et activer le deuxième circuit (Q4) interrupteur de côté bas ;
pendant un secteur #5: i), basculer le deuxième circuit (Q3) interrupteur de côté haut et le deuxième circuit (Q4) interrupteur de côté bas entre des états fermés et ouverts ; ii) désactiver à la fois le troisième circuit (Q5) interrupteur de côté haut et le troisième circuit (Q6) interrupteur de côté bas, et iii) activer le premier circuit (Q1) interrupteur de côté haut et désactiver le premier circuit (Q2) interrupteur de côté bas
et **en ce que** la deuxième configuration de modulation à largeur d'impulsion comprend :
pendant un secteur #0: i), basculer le premier circuit (Q1) interrupteur de côté haut entre des états fermés et ouverts et désactiver un premier circuit (Q2) interrupteur de côté bas ; ii) désactiver à la fois le deuxième circuit (Q3) interrupteur de côté haut et le deuxième circuit (Q4) interrupteur de côté bas, et iii) désactiver le troisième circuit (Q5) interrupteur de côté haut et activer le troisième circuit (Q6) interrupteur de côté bas ;
pendant un secteur #1: i), basculer le troisième circuit (Q6) interrupteur de côté bas entre des états fermés et ouverts et désactiver le troisième circuit (Q5) interrupteur de côté haut ; ii) désactiver à la fois le premier circuit (Q1) interrupteur de côté haut et le premier circuit (Q2) interrupteur de côté bas, et iii) activer le deuxième circuit (Q3) interrupteur de côté haut et désactiver le deuxième circuit (Q4) interrupteur de côté bas ;
pendant un secteur #2: i), basculer le deuxième circuit (Q3) interrupteur de côté haut entre des états fermés et ouverts et désactiver le deuxième circuit (Q4) interrupteur de côté bas ; ii) désactiver à la fois le troisième circuit (Q5) interrupteur de côté haut et le troisième circuit (Q6) interrupteur de côté bas, et iii) désactiver le premier circuit (Q1) interrupteur de côté haut et activer le premier circuit (Q2) interrupteur de côté bas ;
pendant un secteur #3: i), basculer le premier circuit (Q2) interrupteur de côté bas entre des états fermés et ouverts et désactiver le premier circuit (Q1) interrupteur de côté haut ; ii) désactiver à la fois le deuxième circuit (Q3) interrupteur de côté haut et le deuxième circuit (Q4) interrupteur de côté bas, et iii) activer le troisième circuit (Q5) interrupteur de côté haut et désactiver le troisième circuit (Q6) interrupteur de côté bas ;
pendant un secteur #4: i), basculer le troisième circuit (Q5) interrupteur de côté haut entre des états fermés et ouverts et désactiver le troisième circuit (Q6) interrupteur de côté haut ; ii) désactiver à la fois le premier circuit (Q1) interrupteur de côté haut et le premier circuit (Q2) interrupteur de côté bas, et iii) désactiver le deuxième circuit (Q3) interrupteur de côté haut et activer le deuxième circuit (Q4) interrupteur de côté bas ;
pendant un secteur #5: i), basculer le deuxième circuit (Q4) interrupteur de côté haut entre des états fermés et ouverts et désactiver le deuxième circuit (Q3) interrupteur de côté haut ; ii) désactiver à la fois le premier circuit (Q5) interrupteur de côté haut et le troisième circuit (Q6) interrupteur de côté bas, et iii) activer le premier circuit (Q1) interrupteur de côté haut et désactiver le premier circuit (Q2) interrupteur de côté bas.

2. Le montage comme dans la revendication 1, dans lequel chacun des trois enroulements (131) est connecté électriquement à un nœud commun.

3. Le montage comme dans la revendication 1, dans lequel les trois enroulements (131) comprennent un premier enroulement (131-1), un deuxième enroulement (131-2), et un troisième enroulement (131-3) ; et
dans lequel un premier nœud du premier enroulement (131-1), un premier nœud du deuxième enroulement (131-2), et un premier nœud du troisième enroulement (131-3) sont connectés électriquement les uns aux autres.

4. Un système comprenant :
un substrat (1210) de circuit ;
le montage de l'une quelconque des revendications 1 à 3 couplé au substrat (1210) de circuit.

5. Un procédé comprenant :
recevoir une entrée (105) de commande ;
en accord avec l'entrée (105) de commande, commander du courant dans chacun de trois enroulements (131) d'un moteur en commandant trois attaqueurs de courant comprenant un premier attaqueur de courant ayant un premier circuit (Q1) interrupteur de côté haut et un premier circuit (Q2) interrupteur de côté bas, un deuxième attaqueur de courant ayant un deuxième circuit interrupteur de côté haut et un deuxième circuit (Q4) interrupteur de côté bas, et un troisième attaqueur de courant ayant un troisième circuit (Q5) interrupteur de côté haut et un troisième circuit (Q6) interrupteur de côté bas suivant l'une d'une première configuration de modulation en largeur d'impulsion et d'une deuxième configuration de modulation en largeur d'impulsion comprenant des secteurs correspondants chacun à une rotation de 60 degrés et configurés pour équilibrer une démagnétisation positive et une démagnétisation négative d'au moins un enroulement des trois enroulements (131) dans un cycle respectif de commande du courant,
**caractérisé en ce que** la première configuration de modulation en largeur d'impulsion comprend :
pendant un secteur #0: i), basculer un premier circuit (Q1) interrupteur de côté haut et un premier circuit (Q2) interrupteur de côté bas entre des états fermés et ouverts ; ii) désactiver à la fois le deuxième circuit (Q3) interrupteur de côté haut et le deuxième circuit (Q4) interrupteur de côté bas, et iii) désactiver le troisième circuit (Q5) interrupteur de côté haut et activer le troisième circuit (Q6) interrupteur de côté bas ;
pendant un secteur #1: i), basculer le troisième circuit (Q5) interrupteur de côté haut et le troisième circuit (Q6) interrupteur de côté bas entre des états fermés et ouverts ; ii) désactiver à la fois le premier circuit (Q1) interrupteur de côté haut et le premier circuit (Q2) interrupteur de côté bas, et iii) activer le deuxième circuit (Q3) interrupteur de côté haut et désactiver le deuxième circuit (Q4) interrupteur de côté bas ;
pendant un secteur #2: i), basculer le deuxième circuit (Q3) interrupteur de côté haut et le deuxième circuit (Q4) interrupteur de côté bas entre des états fermés et ouverts ; ii) désactiver à la fois le premier circuit (Q5) interrupteur de côté haut et le troisième circuit (Q6) interrupteur de côté bas, et iii) désactiver le premier circuit (Q1) interrupteur de côté haut et activer le premier circuit (Q2) interrupteur de côté bas ;
pendant un secteur #3: i), basculer le premier circuit (Q1) interrupteur de côté haut et le premier circuit (Q2) interrupteur de côté bas entre des états fermés et ouverts ; ii) désactiver à la fois le deuxième circuit (Q3) interrupteur de côté haut et le deuxième circuit (Q4) interrupteur de côté bas, et iii) activer le troisième circuit (Q5) interrupteur de côté haut et désactiver le troisième circuit (Q6) interrupteur de côté bas ;
pendant un secteur #4: i), basculer le troisième circuit (Q5) interrupteur de côté haut et le troisième circuit (Q6) interrupteur de côté bas entre des états fermés et ouverts ; ii) désactiver à la fois le premier circuit (Q1) interrupteur de côté haut et le premier circuit (Q2) interrupteur de côté bas, et iii) désactiver le deuxième circuit (Q3) interrupteur de côté haut et activer le deuxième circuit (Q4) interrupteur de côté bas ;
pendant un secteur #5: i), basculer le deuxième circuit (Q3) interrupteur de côté haut et le deuxième circuit (Q4) interrupteur de côté bas entre des états fermés et ouverts ; ii) désactiver à la fois le troisième circuit (Q5) interrupteur de côté haut et le troisième circuit (Q6) interrupteur de côté bas, et iii) activer le premier circuit (Q1) interrupteur de côté haut et désactiver le premier circuit (Q2) interrupteur de côté bas
et **en ce que** la deuxième configuration de modulation à largeur d'impulsion comprend :
pendant un secteur #0: i), basculer le premier circuit (Q1) interrupteur de côté haut entre des états fermés et ouverts et désactiver un premier circuit (Q2) interrupteur de côté bas ; ii) désactiver à la fois le deuxième circuit (Q3) interrupteur de côté haut et le deuxième circuit (Q4) interrupteur de côté bas, et iii) désactiver le troisième circuit (Q5) interrupteur de côté haut et activer le troisième circuit (Q6) interrupteur de côté bas ;
pendant un secteur #1: i), basculer le troisième circuit (Q6) interrupteur de côté bas entre des états fermés et ouverts et désactiver le troisième circuit (Q5) interrupteur de côté haut ; ii) désactiver à la fois le premier circuit (Q1) interrupteur de côté haut et le premier circuit (Q2) interrupteur de côté bas, et iii) activer le deuxième circuit (Q3) interrupteur de côté haut et désactiver le deuxième circuit (Q4) interrupteur de côté bas ;
pendant un secteur #2: i), basculer le deuxième circuit (Q3) interrupteur de côté haut entre des états fermés et ouverts et désactiver le deuxième circuit (Q4) interrupteur de côté bas ; ii) désactiver à la fois le troisième circuit (Q5) interrupteur de côté haut et le troisième circuit (Q6) interrupteur de côté bas, et iii) désactiver le premier circuit (Q1) interrupteur de côté haut et activer le premier circuit (Q2) interrupteur de côté bas ;
pendant un secteur #3: i), basculer le premier circuit (Q2) interrupteur de côté bas entre des états fermés et ouverts et désactiver le premier circuit (Q1) interrupteur de côté haut ; ii) désactiver à la fois le deuxième circuit (Q3) interrupteur de côté haut et le deuxième circuit (Q4) interrupteur de côté bas, et iii) activer le troisième circuit (Q5) interrupteur de côté haut et désactiver le troisième circuit (Q6) interrupteur de côté bas ;
pendant un secteur #4: i), basculer le troisième circuit (Q5) interrupteur de côté haut entre des états fermés et ouverts et désactiver le troisième circuit (Q6) interrupteur de côté haut ; ii) désactiver à la fois le premier circuit (Q1) interrupteur de côté haut et le premier circuit (Q2) interrupteur de côté bas, et iii) désactiver le deuxième circuit (Q3) interrupteur de côté haut et activer le deuxième circuit (Q4) interrupteur de côté bas ;
pendant un secteur #5: i), basculer le deuxième circuit (Q4) interrupteur de côté haut entre des états fermés et ouverts et désactiver le deuxième circuit (Q3) interrupteur de côté haut ; ii) désactiver à la fois le premier circuit (Q5) interrupteur de côté haut et le troisième circuit (Q6) interrupteur de côté bas, et iii) activer le premier circuit (Q1) interrupteur de côté haut et désactiver le premier circuit (Q2) interrupteur de côté bas.
